# EUROPEAN PATENT APPLICATION

(11) **EP 2 524 868 A2**
(43) Date of publication of application: **21.11.2012**
(21) Application number: 12163113.9
(22) Date of filing: 04.04.2012
(51) Int. Cl.: B64C 29/00

(54) **Vertical Lift Fan**

(30) Priority: 18.05.2011 GB 201108261
(71) Applicant: Rolls-Royce plc, London SW1E 6AT (GB)
(72) Inventor: Payne, Russell Geoffrey, Great Coxwell, Oxfordshire SN7 7NB (GB)
(74) Representative: Tindall, Adam

(57) **Abstract**

A vertical lift fan has a switchable transmission system. The fan includes a lift fan unit having one or more fan rotors. The fan further includes a differential gearbox having an input gear connectable to a transmission shaft for providing power to the fan, and first and second output gears. The first output gear drives the fan rotors. The fan further includes a first brake unit for braking the first output gear, and a second brake unit for braking the second output gear. When the second brake unit is activated and the first brake unit is deactivated, rotational action provided by the transmission shaft is diverted to the first output gear to turn the fan rotors, and when the first brake unit is activated and the second brake unit is deactivated, rotational action provided by the transmission shaft is diverted to the second output gear away from the fan rotors.

## Description

The present invention relates to a vertical lift fan.

Vertical take-off and landing or short take-off and landing are desirable characteristics for an aircraft, and fixed vertical lift fan systems can be used for this purpose.

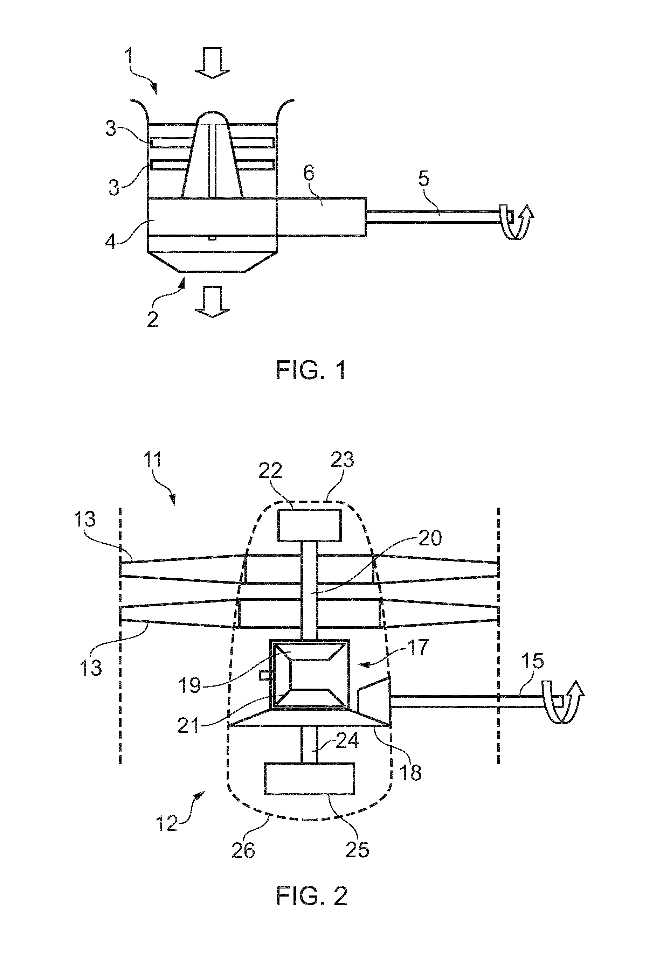

A fixed vertical lift fan is typically powered by a drive transmission shaft from a main engine, such as a gas turbine engine. Figure 1 shows schematically a conventional lift fan arrangement. The fan has an upper air intake 1 and a lower exhaust nozzle 2 with one or more coaxial fan rotors 3 therebetween. The fan rotors are driven by a gearbox 4, which in turn receives drive from an aircraft main engine via a transmission shaft 5. A multi-plate friction clutch 6 located between the gearbox and the transmission shaft 5 allows the drive to the fan to be connected and disconnected. This enables the controlled selection and deselection of power to the lift fan, since the aircraft does not need vertical lift thrust at all times.

Due to wear, the clutch friction plates need replacement at regular intervals. This entails the removal of the clutch 6 as a separate module. However, because of the position of the clutch between the gearbox 4 and the drive shaft 5, this removal requires the splitting of the transmission shaft from the clutch housings, which in turn requires the removal of the entire lift fan system from the aircraft. Evidently, this is both disruptive and expensive.

To increase the wear-out intervals between friction plate replacements, the clutch 6 can be oversized, but this leads to an overly large and heavy system.

It would be desirable to provide a vertical lift fan which avoided or reduced these problems.

Accordingly, the present invention provides a vertical lift fan having a switchable transmission system, the fan including:
a lift fan unit having one or more fan rotors,
a differential gearbox having an input gear connectable to a transmission shaft for providing power to the fan, and first and second output gears, the first output gear driving the fan rotors,
a first brake unit for braking the first output gear, and
a second brake unit for braking the second output gear;
wherein, when the second brake unit is activated and the first brake unit is deactivated, rotational action provided by the transmission shaft is diverted to the first output gear to turn the fan rotors, and when the first brake unit is activated and the second brake unit is deactivated, rotational action provided by the transmission shaft is diverted to the second output gear away from the fan rotors.

Advantageously, the fan does not require wear-out friction components in the drive-line between the transmission shaft and the fan rotors. Further, the first and second brake units, which may be wear-out friction components, can be located in accessible positions allowing them to be removed or serviced without removal of the lift fan unit from an aircraft.

The differential gearbox can, conveniently, replace the gearbox of the conventional lift fan arrangement to provide an appropriate gear ratio between the transmission shaft and the fan rotors. Further, the differential gearbox can turn the drive through, typically, 90° from the transmission shaft to the fan rotors.

The fan may have any one or, to the extent that they are compatible, any combination of the following optional features.

The second output gear can be an idler gear. That is, it can be a free-spinning "dead-end" for use in normal forward flight.

Preferably the brake units are configured such that only one of the brake units is active at any one time. However, another option is for the brake units to be allowed to act simultaneously and with variable amounts of slippage (i.e. to act as clutches) in order to vary the amount of lift fan thrust.

Typically, the first output gear drives a drive shaft which is coaxial with the fan rotors.

The vertical lift fan can further include a nose cone which houses one of the first and second brake units. Additionally or alternatively, the vertical lift fan can further include a sump fairing which houses one of the first and second brake units. The nose cone and sump fairing of a vertical lift fan are typically relatively accessible.

Conveniently, the differential gearbox may be positioned below the lift fan unit (in which case the first brake unit can be housed in the nose cone and the second brake unit in the sump fairing).

Embodiments of the invention will now be described by way of example with reference to the accompanying drawings in which:
Figure 1 shows a schematic diagram of a conventional vertical lift fan arrangement; and
Figure 2 shows a schematic diagram of a vertical lift fan arrangement according to the present invention.

Figure 2 shows schematically a vertical lift fan arrangement according to the present invention. The fan has an upper air intake 11 and a lower exhaust nozzle 12 with one or more coaxial fan rotors 13 therebetween. The fan receives drive power from an aircraft main engine via a transmission shaft 15.

The transmission shaft 15 enters the side of the vertical lift fan below the fan rotors 13 and meshes to an input gear 18 of a differential gearbox 17. The gearbox has a first output gear 19 which drives the fan rotors 13 via a coaxial drive shaft 20, which is 90° to the transmission shaft. The gearbox thus determines the gearing between the transmission shaft and the drive shaft. The gearbox also has a second output gear 21.

The drive shaft 20 terminates in a first brake unit 22 housed in a nose cone 23 of the fan. The second output gear 21 drives a further shaft 24 which terminates in a second brake unit 25 housed in a gearbox sump fairing 26 of the fan.

The differential gearbox 17 and brake units 22, 25 effectively provide a switchable transmission system for the vertical lift fan. Only one of the brake units is active at any one time. When vertical lift is wanted, the first brake unit 22 is deactivated and the second brake unit 25 activated. The rotational action provided by the transmission shaft 15 is prevented from turning the further shaft 24 and is diverted into the drive shaft 20 and thence to the fan rotors 13. Conversely, when vertical lift is not wanted, the first brake unit is activated and the second brake unit deactivated. The rotational action is then prevented from turning the drive shaft and is diverted into the further shaft. Effectively, the second output gear 21 is an idler gear that spins freely during normal forward flight.

The brake units 22, 25 are relatively easily accessible by virtue of being housed in the nose cone 23 and the sump fairing 26. In particular, worn out friction components of these units, such as brake pads, can be replaced without having to split the transmission shaft 15 from the gearbox 17, and thus without having to remove the fan from the aircraft. This greatly simplifies fan maintenance, reduces the cost of ownership of the aircraft, as well as potentially reducing the installed weight of the lift fan.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A vertical lift fan having a switchable transmission system, the fan including:
a lift fan unit having one or more fan rotors (13),
a differential gearbox (17) having an input gear (18) connectable to a transmission shaft (15) for providing power to the fan, and first (19) and second (21) output gears, the first output gear driving the fan rotors,
a first brake unit (21) for braking the first output gear, and
a second brake unit (22) for braking the second output gear;
wherein, when the second brake unit is activated and the first brake unit is deactivated, rotational action provided by the transmission shaft is diverted to the first output gear to turn the fan rotors, and when the first brake unit is activated and the second brake unit is deactivated, rotational action provided by the transmission shaft is diverted to the second output gear away from the fan rotors.

2. A vertical lift fan according to claim 1, wherein the second output gear is an idler gear.

3. A vertical lift fan according to claim 1 or 2, wherein the first output gear drives a drive shaft (20) which is coaxial with the fan rotors.

4. A vertical lift fan according to any one of the previous claims further including a nose cone (23) which houses one of the first and second brake units.

5. A vertical lift fan according to any one of the previous claims further including a sump fairing (26) which houses one of the first and second brake units.

6. A vertical lift fan according to any one of the previous claims, wherein the differential gearbox is positioned below the lift fan unit.
